Europäisches Patentamt

(19) European Patent Office

Office européen des brevets

(11) EP 1 245 816 A2

(12) EUROPEAN PATENT APPLICATION

(43) Date of publication:
02.10.2002 Bulletin 2002/40

(51) Int Cl.7: F02D 41/40, F02D 41/06

(21) Application number: 02006932.4

(22) Date of filing: 26.03.2002

(84) Designated Contracting States:
AT BE CH CY DE DK ES FI FR GB GR IE IT LI LU
MC NL PT SE TR
Designated Extension States:
AL LT LV MK RO SI

(30) Priority: 30.03.2001 JP 2001102181
17.01.2002 JP 2002008851

(71) Applicant: Mazda Motor Corporation
Aki-gun, Hiroshima 730-8670 (JP)

(72) Inventors:
• Saito, Tomoaki
Aki-gun, Hiroshima 735-8670 (JP)
• Kondou, Terunori
Aki-gun, Hiroshima 735-8670 (JP)
• Shouya, Taizou
Aki-gun, Hiroshima 735-8670 (JP)
• Habu, Kouji
Aki-gun, Hiroshima 735-8670 (JP)

(74) Representative: Müller-Boré & Partner
Patentanwälte
Grafinger Strasse 2
81671 München (DE)

(54) **Fuel injection apparatus of diesel engine**

(57) In a diesel engine which executes main injection near a top dead center of a compression stroke and executes post injection in an expansion stroke, the post injection is executed at a main injection combustion end timing, that is, at a timing in which heat generating rate due to a combustion of the main injection fuel is substantially 0 or less, whereby generating amounts of HC and soot are reduced. Further, at a cold time or in a cold state, a fuel injection amount in accordance with the post injection is increased rather than a normal time or in a warm state, whereby a warming-up of the engine or a temperature increase and activation of an exhaust gas purifying catalyst is promoted.

*Fig.1*

EP 1 245 816 A2

**Description**

This application is based on the applications No. 2001-102181 and No. 2002-8851 filed in Japan, the contents of which are hereby incorporated by references.

BACKGROUND OF THE INVENTION

FIELD OF THE INVENTION

The present invention relates to a fuel injection apparatus of a diesel engine.

DESCRIPTION OF PRIOR ART

In general, in a direct injection type diesel engine for a motor vehicle, the structure is made such as to intake air into a combustion chamber in an intake stroke, compress the air in a compression stroke to make in a high temperature and high pressure state and inject a fuel into the air from a fuel injector near a top dead center of the compression stroke. Further, the fuel self-ignites in the air having a high temperature and a high pressure. In such a diesel engine, since a substantially fixed amount (maximum amount) of air is generally sucked within the combustion chamber, and the structure is made such that an engine output is controlled by increasing or reducing the fuel injection amount from the fuel injector, an air excess state is frequently generated.

In this case, since air pollutants such as NOx (nitrogen oxide), CO (carbon monoxide), HC (hydro carbon) and the like are contained in an exhaust gas discharged from a diesel engine, an exhaust gas purifying catalyst is provided in an exhaust passage in order to purify the air pollutants. Such an exhaust gas purifying catalyst has a property of bringing out an exhaust gas purifying performance in a state where a temperature is higher than an activation temperature, however, of not sufficiently bringing out the exhaust gas purifying performance in a state where a temperature is lower than the activation temperature. Accordingly, the exhaust gas purifying catalyst can sufficiently purify the exhaust gas in a warm state, however, can not sufficiently purify the exhaust gas in a cold state (at a time of starting in a cold state). In this case, since the air excess state is frequently generated in the diesel engine, the temperature of the exhaust gas is comparatively low, so that an activity of the exhaust gas purifying catalyst in the cold state is deteriorated.

Then, there has been proposed a diesel engine structured such that a fuel injection is separated into a main injection executed near a top dead center of a compression stroke and a post injection (after injection) executed in an expansion stroke after the main injection to execute, and a temperature of an exhaust gas is increased by a combustion heat of a fuel injected on the basis of the post injection, thereby intending a warming up of the engine and promoting a temperature increase of the exhaust gas purifying catalyst, that is, an activation (for example, refer to Japanese Laid-open Patent Publication No. 2000-170585).

However, in the case of executing the post injection in the manner mentioned above, if an aspect (an injection timing, an injection amount or the like) of the post injection is not proper, there is generated a problem that a generating amount of HC or soot is increased, and fuel consumption performance is reduced. Accordingly, in the diesel engine disclosed in Japanese Laid-open Patent Publication No. 2000-170585, the structure is made such as to prevent the soot from generating and restrict a reduction of fuel consumption performance, by setting the post injection timing to 10 to 20 °CA after the compression top dead center.

The inventor of the present application has found on the basis of experiments a fact that it is possible to widely reduce the generating amount of the HC and the soot by executing the post injection near a timing at which a combustion of the main injection fuel is ended (that is, a timing at which a heat generated by the combustion of the fuel becomes substantially 0), in the expansion stroke after the main injection. However, since the timing at which the combustion of the main injection fuel is ended changes in correspondence to an operating state of a motor vehicle or an engine, there is a problem that it is quite difficult to intend the warming up of the engine, or the temperature increase and activation of the exhaust gas purifying catalyst on the basis of the post injection while restricting the generation of HC and soot.

SUMMARY OF THE INVENTION

The present invention is made in order to solve the conventional problems mentioned above, and a problem to be solved of the present invention is to provide a fuel injection apparatus of a diesel engine which can intend a warming up of an engine or a temperature increase and activation of an exhaust gas purifying catalyst while effectively restricting a generation of HC and soot.

There is provided a fuel injection apparatus of a diesel engine in order to solve the problem mentioned above and in accordance with the present invention. The fuel injection apparatus includes (i) a fuel injector for injecting a fuel into a combustion chamber, (ii) a main injection device for executing a main injection (including a multi-stage injection) by causing the fuel injector to inject the fuel so that a main combustion (each combustion including a case of being a multi-stage combustion) occurs near a top dead center of a compression stroke, and (iii) a post injection device for executing a post injection (including a multi-stage injection) by causing the fuel injector to inject the fuel on the basis of a timing at which the combustion of the fuel (hereinafter, refer to as a main injection fuel") injected in accordance with the main injection ends, at a predetermined timing within a period from the main injection to an expansion stroke (an end period). The fuel injection apparatus is characterized in that the post injection device increases a fuel injection amount of the post injection in a cold state (at a time of starting in a cold state or the like) rather than in a warm state (at a time of warming up).

In this case, the post injection device may be structured such as to increase the fuel injection amount of the post injection when the exhaust gas purifying catalyst provided in the exhaust passage is not activated, rather than at a time of being activated.

Further, it is preferable that the post injection device executes the post injection so that the fuel injected an accordance with the post injection (hereinafter, refer to as an "post injection fuel") starts to burn near a timing at which the combustion of the main injection fuel ends (hereinafter, refer to as a "main injection combustion end timing"). In particular, the post injection may be executed so that the fuel injected in accordance with the post injection starts to burn within a predetermined period after the combustion of the fuel injected in accordance with the main injection ends.

In this case, since the post injection mentioned above follows the main injection combustion end timing, it is sometimes called as a follow-up injection.

In this fuel injection apparatus of the diesel engine, when it is in the cold state or the exhaust gas purifying catalyst is not activated, the fuel injection amount in accordance with the post injection is increased in comparison with a time when it is in the warm state or the exhaust gas purifying catalyst is activated. Accordingly, when it is in the cold state or the exhaust gas purifying catalyst is not activated, the temperature of the exhaust gas is increased due to the combustion heat of the post injection fuel, whereby the warming up of the engine and the temperature increase or activation of the exhaust gas purifying catalyst are promoted.

Further, since the post injection timing is set on the basis of the main injection combustion end timing, for example, so that the post injection fuel starts combustion near the main injection combustion end timing, it is possible to effectively restrict the generation of HC and soot.

Accordingly, it is possible to intend the warming up of the engine or the temperature increase and activation of the exhaust gas purifying catalyst on the basis of the post injection while effectively restricting the generation of HC and soot.

In the fuel injection apparatus of the diesel engine mentioned above, it is preferable that the diesel engine is provided with a turbo supercharger. In this case, it is possible to more effectively promote the warming up of the engine or the temperature increase and activation of the exhaust gas purifying catalyst by increasing the intake amount by the turbo supercharger.

In the fuel injection apparatus of the diesel engine with the turbo supercharger, it is preferable that the main injection timing and the post injection timing are set so that a period between the main injection timing and the post injection timing becomes shorter in the cold state than that in the period of the warm state (for example, by advancing the post injection timing). In the case of increasing the intake air amount (an intake oxygen amount) by the turbo supercharger, the main injection combustion end timing advances. Then, when shortening the period between the main injection timing and the post injection timing (for example, advancing the post injection timing) in correspondence to the advance of the main injection combustion end timing, it is possible to start the combustion of the post injection fuel near the main injection combustion end timing, and it is possible to more effectively restrict the generation of HC and soot.

In the fuel injection apparatus of the diesel engine mentioned above, it is preferable that the main injection device retards the main injection timing in the cold state rather than the warm state. In accordance with the structure, it is possible to make the exhaust gas temperature higher, and it is possible to more effectively promote the warming up of the engine or the temperature increase and activation of the exhaust gas purifying catalyst.

In this case, in the fuel injection apparatus of the diesel engine mentioned above, the post injection device may be structured such as to execute the post injection only in the cold state.

BRIEF DESCRIPTION OF THE DRAWINGS

Various characteristics and advantages of the present invention will become clear from the following description taken in conjunction with the preferred embodiments with reference to the accompanying drawings throughout which like parts are designated by like reference numerals, in which:

Fig. 1 is a schematic view of a system of a direct injection diesel engine provided with a fuel injection apparatus in accordance with the present invention;

Fig. 2 is a flow chart showing a basic control method of a fuel injection control in the engine shown in Fig. 1;

Figs. 3A to 3C are time charts each showing a change with age of a heat generating rate within a combustion chamber;

Figs. 4A to 4C are graphs each showing a relation between a post injection timing and a soot generating amount;

Figs. 5A to 5C are graphs each showing a relation between the post injection timing and an HC amount in an exhaust gas;

Figs. 6A to 6C are graphs each showing a relation between the post injection timing and a fuel consumption rate;

Figs. 7A to 7C are graphs each showing a relation between the post injection timing and a NOx amount in the exhaust gas;

Figs. 8A to 8C are graphs each showing a relation between the post injection rate and a soot generating amount;

Figs. 9A to 9C are graphs each showing a relation between the post injection rate and the HC amount in the exhaust gas;

Figs. 10A to 10C are graphs each showing a relation between the post injection rate and the fuel consumption rate;

Fig. 11 is a flow chart showing a control method of a fuel injection control at a cold time and a normal time;

Fig. 12A is a view showing a property of a main injection fuel amount map for a normal time in which an engine speed and a target torque are used as parameters;

Fig. 12B is a view showing a property of a main injection timing map in which the engine speed and the target torque are used as parameters;

Fig. 12C is a view showing a change property of a main injection timing compensating value with respect to a catalyst temperature;

Fig. 12D is a view showing a property of an post injection timing compensating value map in which the engine speed and the target torque are used as parameters;

Fig. 13A is a view showing a property of a post injection fuel amount map for a normal time in which the engine speed and the target torque are used as parameters;

Fig. 13B is a view showing a property of a post injection fuel amount map for a cold time in which the engine speed and the target torque are used as parameters;

Fig. 13C is a view showing a change property of a post injection fuel amount compensating value with respect to a catalyst temperature; and

Fig. 14 is a graph showing a result obtained by actually measuring a dependency of an exhaust gas temperature with respect to a post fuel injection amount and a post injection timing.

DESCRIPTION OF PREFERRED EMBODIMENTS

A description will be in particular given below of an embodiment in accordance with the present invention.

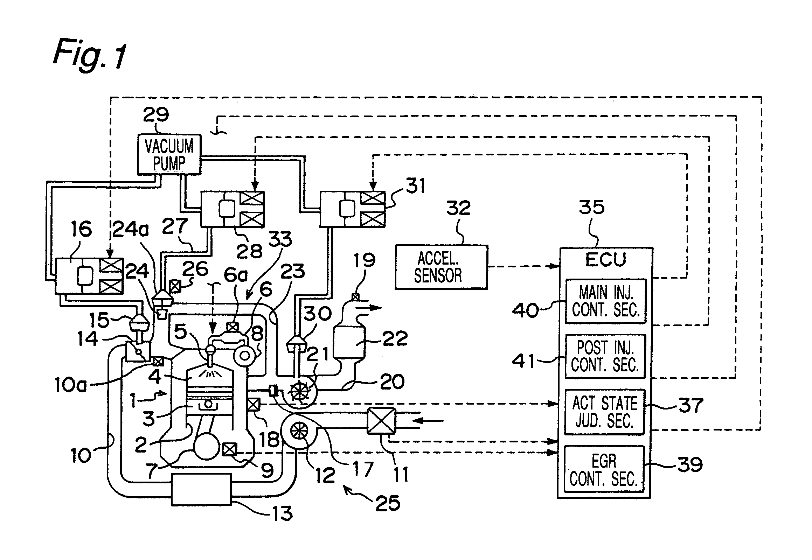

Fig. 1 shows a structure of a diesel engine (hereinafter, refer simply to as an "engine") for a motor vehicle provided with a fuel injection apparatus in accordance with the present invention. As shown in Fig. 1, a main body portion 1 of the engine (hereinafter, refer to as an "engine body 1") has a plurality of cylinders 2 (only one is illustrated), and a piston 3 is fitted and inserted to each of the cylinders 2 so as to freely reciprocate. Further, a combustion chamber 4 is defined within the cylinder 2 by an upper surface of the piston 3. Further, a fuel injector 5 is arranged substantially in a center portion of a ceiling surface of the combustion chamber 4, and the structure is made such that a fuel is directly injected within the combustion chamber 4 from the fuel injecor 5 at a predetermined timing. Further, a water temperature sensor 16 for detecting a cooling water temperature (an engine temperature) of engine is provided so as to face to a water jacket (not shown) of the engine body 1.

Each of the fuel injectors 5 is connected to a common rail 6 storing a fuel of high pressure. A pressure sensor 6a for detecting an internal fuel pressure (a common rail pressure) is arranged in the common rail 6, and a high pressure fuel supply pump 8 driven by a crank shaft 7 is connected to the common rail 6. The high pressure fuel supply pump 8 is structured such as to keep a fuel pressure within the common rail 6 detected by the pressure sensor 6a to be not less than about 20 MPa at a time of idling operation, by controlling the supply pressure of the fuel, and to keep it to be not less than 50 MPa at the other operation times.

Further, a crank angle sensor 9 for detecting an angle of rotation is provided in the crank shaft 7. The crank angle sensor 9 is constituted by a detected plate provided in an end portion of the crank shaft 7 and an electromagnetic pickup arranged in an outer peripheral portion so as to oppose thereto, although a detailed description is omitted, and is structured such that the electromagnetic pickup detects a projection portion formed in the outer peripheral portion of the detected plate passing therethrough to output a pulse signal.

A downward end of an intake passage 10 connected to the engine body 1 is branched into sections corresponding to the respective cylinders 2 via a surge tank (not shown), and the branch sections are respectively connected to the combustion chambers 4 of the respective cylinders 2 via respective intake ports. Further, an intake air pressure sensor 10a for detecting a pressure of an intake air supplied within each of the cylinders 2 is provided in the serge tank.

The intake passage 10 is provided with an air flow sensor 11 for detecting an intake air flow amount sucked within the engine body 1, a blower 12 driven by a turbine 21 described later and compressing the intake air, an inter cooler for cooling an air compressed by the blower 12 to have a high temperature, and an intake air throttle valve 14 for changing a circulation area of the intake air, in a sequential order from an upstream side as seen in an intake air flowing direction.

The intake air throttle valve 14 is constituted by a butterfly valve in which a notch is provided so that the intake air can circulate even in a full-close state. The intake air throttle valve 14 is structured such that a vale opening degree is changed in correspondence to a magnitude of a negative pressure applied to a diaphragm type actuator 15 by an electromagnetic valve 16 for controlling a negative pressure, in the same manner as an EGR valve 24 described later. Further, a sensor (not shown) detecting a valve opening degree thereof is provided in a placing portion of the intake air throttle valve 14.

An upstream end of an exhaust passage 20 connected to the engine body 1 is branched into sections corresponding to the respective cylinders 2, and the branched sections are connected to the combustion chambers 4 of the respective cylinders 2 via respective exhaust ports. A linear $O_2$ sensor 17 for detecting an $O_2$ concentration in the exhaust gas, a turbine 21 rotated due to an exhaust gas flow, an exhaust gas purifying apparatus 22 for purifying air pollutants such as NOx and the like in the exhaust gas, and an NOx sensor 19 for detecting an NOx concentration in the exhaust gas passing through the exhaust gas purifying apparatus 22 are arranged in the exhaust gas passage 20 in a sequential order from an upstream side as seen in the exhaust gas flowing direction. The exhaust gas purifying apparatus 22 absorbs NOx in an $O_2$ excess atmosphere, and on the contrary, uses an NOx trap catalyst (an exhaust gas purifying catalyst) provided with an NOx absorber discharging the NOx due to the reduction of $O_2$ concentration.

The NOx trap catalyst contains Pt as a catalyst component, Ba as the NOx absorber, and $Al_2O_3$ as a catalyst support. In this case, when a percentage content of $O_2$ in the exhaust gas is comparatively high (at a time of being lean), Ba absorbs the NOx (NO and $NO_2$) in the exhaust gas. In addition, Ba frequently absorbs the NOx in a form of $Ba(NO_3)_2$. On the other hand, Ba discharges the absorbed NOx into the exhaust gas in a form of NO or $NO_2$, at a time when the percentage content of $O_2$ in the exhaust gas (at a time of being rich). Further, at this time, Pt utilizes HC in the exhaust gas as a reducing agent to reduce and purify the NOx into harmless $N_2$.

In addition, it is a matter of course that the NOx purifying catalysts other than the NOx trap catalyst, or the other exhaust gas purifying catalysts such as an oxidation catalyst or the like may be employed.

The exhaust gas purifying apparatus 22 using the NOx trap catalyst is provided with a cordierite catalyst support formed in a honeycomb structure having a lot of small diameter hole portions (through holes) extending in parallel to each other along the exhaust gas flow direction, although details are not illustrated, and is structured such that an NOx trap catalyst layer is formed on each of through hole wall surfaces. In particular, the catalyst layer including the NOx trap catalyst mentioned above is carried on a catalyst support such as an MFI type zeolite (ZSM5) as a porous material. Further, the exhaust gas circulates within a lot of hole portions formed in the catalyst support. Accordingly, when an amount of soot (smoke) contained in the exhaust gas is large, there is a risk that the hole portion is clogged. However, in this engine, since the generating amount of soot is reduced on the basis of the post injection as described later, the problem mentioned above is not generated.

A turbo supercharger provided with the blower 12 arranged in the intake passage 10 and the turbine 21 arranged in the exhaust passage 20 is a variable geometry turbo (VGT) capable of changing a nozzle cross sectional area of the exhaust passage 20. The turbo supercharger 25 is provided with a diaphragm type actuator 30 for changing a nozzle cross sectional area, and an electromagnetic valve 31 for controlling a negative pressure of the actuator 30.

An exhaust gas recirculation passage 23 (hereinafter, refer to an "EGR passage 23") for recirculating a part of the exhaust gas as an EGR to the intake passage 10 is connected to the exhaust passage 20 in an upstream side of the turbine 21. Further, a downstream end of the EGR passage 23 is connected to the intake passage 10 in a downstream side of the intake air throttle valve 14. A negative pressure operation type exhaust gas recirculation amount adjusting valve 24 (hereinafter, refer to an "EGR valve 24") in which a valve opening degree can be adjusted is arranged in a downstream portion of the EGR passage 23, and an exhaust gas recirculating means 33 is constituted by the EGR valve 24 and the EGR passage 23. In this case, the exhaust gas recirculating means 33 is provided mainly for reducing a combustion temperature of the fuel to reduce a generating amount of NOx.

The EGR valve 24 is structured such that a valve main body is energized in a closing direction by a spring and is energized in an opening direction by a diaphragm type actuator 24a, thereby linearly adjusting an opening degree of the EGR passage 23, although details are not illustrated. A negative passage 27 is connected to the actuator 24a, and the negative pressure passage 27 is connected to a vacuum pump 29 (negative pressure source) via an electromagnetic valve 28 for controlling the negative pressure. Further, the electromagnetic valve 28 adjusts the negative pressure for driving the EGR valve by communicating or shutting the negative pressure passage 27, whereby the EGR valve 24 is driven so as to be opened or closed. Further, a lift sensor 26 for detecting a position of the valve main body is provided in the position of the EGR valve 24.

The fuel injector 5, the high pressure fuel supply pump 8, the intake air throttle valve 14, the EGR valve 24, the turbo supercharger 25 and the like are controlled with respect to operating states thereof in correspondence to control signals outputted from an engine control unit 35 (hereinafter, refer to as an "ECU 35") described later. Further, an output signal of the pressure sensor 6a, an output signal of the crank angle sensor 9, an output signal of the air flow sensor 11, an output signal of a water temperature sensor 18, and an output signal of an accelerator sensor 32 for detecting an operation amount of an accelerator pedal operated by a driver are inputted to the ECU 35.

The ECU 35 is provided with an activating state judging section (or device) 37, an exhaust gas recirculation control section (or device) 39, a main injection control section (or device) 40 and a post injection control section (or device) 41. In this case, the activating state judging section 37 judges whether or not the exhaust gas purifying apparatus 22 (NOx trap catalyst) is in an activating state. The exhaust gas recirculation control section 39 drives the EGR valve 24 in correspondence to an operating state of the engine to control an exhaust gas recirculation amount.

The main injection control section 40 (main injection device) controls an injecting state of the fuel (main injection fuel) injected from the fuel injector 5 by the main injection near a top dead center of the compression stroke, in correspondence to the operating state of the engine. The post injection control section 41 (post injection device) controls an injecting state of the fuel (post injection fuel) injected from the fuel injector 5 by the post injection on the basis of a main injection combustion end timing at a predetermined timing (within a predetermined period of the expansion stroke after the main injection) from the main injection timing of the fuel to the expansion stroke. In addition, as described later, the post injection control section 41 increases the fuel injection amount by the post injection in the cold state of the engine (at a time of starting in the cold state), in comparison with the warm state.

In the case of the operation state in which an exhaust amount of Raw NOx from the interior portion of the combustion chamber 4, for example, in the case that the engine is in the operation state having a middle load or more and a middle rotation or more, or in the case that the exhaust gas purifying apparatus 22 (NOx trap catalyst) is in an inactive state, or the like, the post injection is executed at a predetermined timing within a range of ATDC (after top dead center) 30 to 60 °CA (crank angle) after the main injection. Accordingly, it is possible to restrict (control) the discharge of NOx into the atmospheric air.

In this engine, it is possible to reduce the HC and soot generated in accordance with the main injection by executing the post injection at the predetermined timing after the main injection. In this case, in the driving condition in which the amount of soot discharged from the combustion chamber 4 tends to become large, the post injection is executed at a predetermined timing set on the basis of a timing at which the diffusing combustion of the fuel in accordance with the main injection is ended (a timing of ATDC 30 to 60 °CA, in the operating state in which the engine speed is equal to or more than 1500 rpm), whereby the discharge amount of the soot is reduced. In addition, as the operating state in which the discharge amount of soot is large, for example, there can be listed up an operating state in which the engine load is equal to or more than a middle load, an operating state in which the engine speed is equal to or more than a middle rotational speed such as about 2000 rpm, or a case that in the case that a diesel particulate filter (DPF) is placed in the exhaust gas passage 20, the DPF is in a low temperature state equal to or less than 300°C and the purifying function is low.

Further, the main injection corresponds to an injection executed at a predetermined timing after the intake stroke before in an early stage of the expansion stroke at an injection amount corresponding to a required output or more. In the case that the diffusing combustion of all or a part of the fuel is executed in accordance with the main injection, the soot is generated, so that the post injection is executed for reducing the soot. In this case, when executing the main injection at a desired timing after the timing near the top dead center of the compression stroke before the early timing of the expansion stroke, the diffusing combustion can be executed with respect to all the fuel except the case of a low load. On the contrary, in the case of the low load, premix combustion is executed with respect to a part of the fuel, and the diffusing combustion is executed with respect to the remaining fuel.

Further, when executing the main injection after the intake stroke before the top dead center of the compression stroke, the premix combustion is mainly executed, and in the case of this combustion, the soot is hardly generated. There is also a case that the fuel attached to the wall surface of the combustion chamber is ignited near the top dead center of the compression stroke and the diffusing combustion is executed, thereby generating the soot. However, even in this case, it is possible to reduce the soot in accordance with the post injection. In addition, this includes a case that the main injection is executed separately by at least two times including a predetermined timing after the intake stroke before the top dead center of the compression and a predetermined timing after a timing near the top dead center of the compression before an early stage of the expansion stroke.

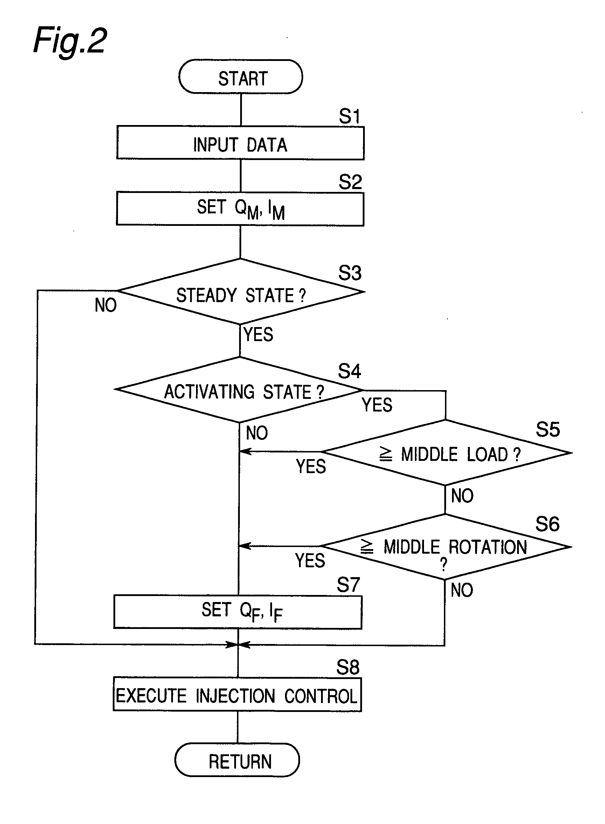

A description will be given below of a control way of the fuel injection control in the engine. At first, a description will be given of a control way of a basic control in the fuel injection control with reference to a flow chart shown in Fig. 2.

As shown in Fig. 2, in this fuel injection control, at first, detection data of the respective sensors are inputted in Step S1. Next, in Step S2, a fuel injection amount $Q_M$ in the main injection corresponding to a required torque of the engine and a main injection timing $I_M$ are read from a preset map to be set. Thereafter, in Step S3, it is judged whether or not the engine is in a steady operation state.

In the case that it is judged in Step S3 that the engine is in the steady state (YES), it is judged in Step S4 by the activating state judging section 37 provided in the ECU 35 whether or not the exhaust gas purifying apparatus 22 (NOx trap catalyst) is in an activating state having a temperature equal to or more than a predetermined temperature. Here, when it is judged that the exhaust gas purifying apparatus 22 is in the activating state (YES), it is judged in Step S5 whether or not the engine load is equal to or more than a middle load. Further, when it is judged that the engine load is not equal to or more than the middle load (NO), it is judged in Step S6 whether or not the engine speed is equal to or more than a middle rotation.

Accordingly, in the case that it is judged in Step S4 that the exhaust gas purifying apparatus 22 (NOx trap catalyst) is not in the activating state (is in the inactive state) (NO), in the case that it is judged in Step S5 that the engine load is equal to or more than the middle load (YES) or in the case that it is judged in Step S6 that the engine speed is equal to or more than the middle rotation (YES), a fuel injection amount $Q_F$ in the post injection corresponding to the operating state of the engine and a post injection timing $I_F$ are read out from a preset map to be set in Step S7. Accordingly, the post injection timing is set at a predetermined timing within the ATDC 30 to 60 °CA after the main injection. Thereafter, the injection control of the fuel is executed in Step S8.

As mentioned above, for example, in the case of executing the post injection within the range between the ATDC 30° and 60° after the main injection, at a timing at which the diffusing combustion generated after the fuel (the main injection fuel) injected within the combustion chamber 4 in accordance with the main injection is ended (hereinafter, refer to as a "diffusing combustion end timing"), the combustion of the fuel (the post injection fuel) injected within the combustion chamber 4 in accordance with the post injection is executed. Accordingly, mixing between the soot and the oxygen which exist within the combustion chamber 4 at the diffusing combustion end timing is promoted. In the manner mentioned above, since the post injection fuel is injected and the combustion is started in a state of being easily ignited, it is possible to reduce the generation of the soot.

In this case, a description will be given in detail of the diffusing combustion end timing. An aspect of the diffusing combustion is determined on the basis of a heat generation rate. For example, in accordance with a publication "Internal Combustion Engine Lecture (issued by Yokendo Print Co., Ltd, written by Fujio Nagao), the heat generation rate is expressed by the following formula 1.

$$dQ/d\theta = A/(K_\theta - 1) \cdot [V_\theta \cdot (dP_\theta/d\theta)$$

$$+ K_\theta \cdot P_\theta \cdot (dV_\theta/d\theta)] \hspace{4cm} \text{formula 1}$$

A: mechanical equivalent of heat
$K_\theta$: ratio of specific heat
$V_\theta$: engine displacement
$P_\theta$: cylinder pressure
$\theta$: crank angle

For example, in accordance with a written manual of a fuel analyzing apparatus CB566 manufactured by Ono Instruments Co., Ltd., the ratio of specific heat $K_\theta$ is expressed by the following formulas 2 to 5.

$$K_\theta = Cp/Cv \hspace{4cm} \text{formula 2}$$

$$Cp = ap + b \cdot (T_\theta/100) + c \cdot (T_\theta/100)^2$$

$$+ d \cdot (100/T_\theta) \hspace{4cm} \text{formula 3}$$

$$Cv = Cp - (A \cdot Ro)/M \hspace{4cm} \text{formula 4}$$

$$T_\theta = (P_\theta \cdot V_\theta)/29.27 \cdot G \hspace{4cm} \text{formula 5}$$

Cp: specific heat at constant pressure
Cv: specific heat at constant volume

Ro: gas constant
M: molecular weight of air
$T_\theta$: gas temperature
G: gas weight
ap, b, c, d: other constants

In accordance with the formulas 2 to 5, a heat generation rate $dQ/d\theta$ expressed by the formula 1 is a function $f(P_\theta, V_\theta)$ in which the cylinder pressure $P_\theta$ and the engine displacement $V_\theta$ are independent parameter. Further, the engine displacement $V_\theta$ is expressed by the following formula 6 on the basis of a bore diameter B and a stroke S.

$$V_\theta = ( \pi \cdot B^2 \cdot S/8) \cdot (1 - \cos\theta) \qquad \text{formula 6}$$

Accordingly, the heat generation rate $dQ/d\theta$ is expressed by the following formula 7.

$$dQ/d\theta = [f(P_\theta + {}_{\Delta\theta}, V_\theta + {}_{\Delta\theta}) - f(P_\theta, V_\theta)]/\Delta\theta \qquad \text{formula 7}$$

Therefore, if the cylinder pressure data per every crank angles exist, it is possible to compute the heat generation rate on the basis thereof.

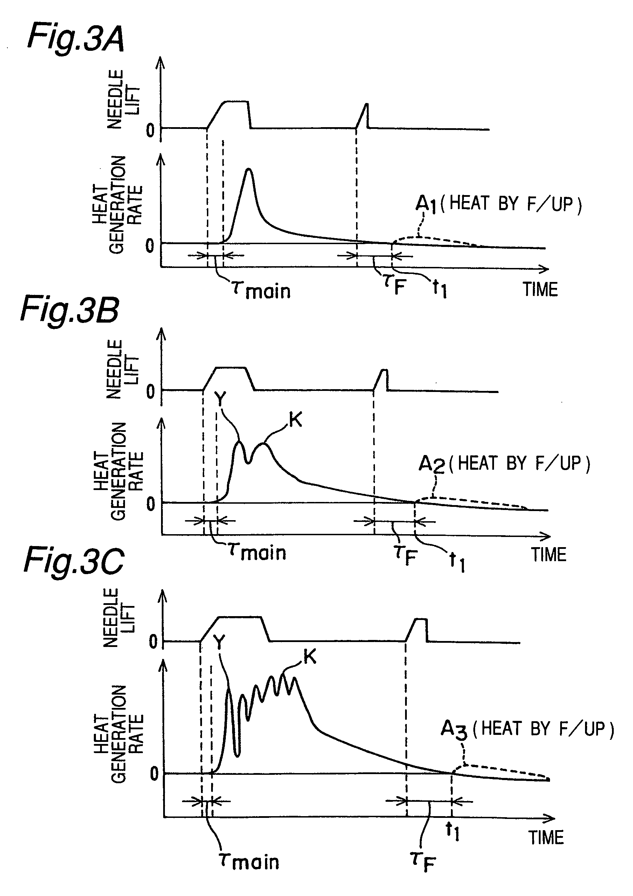

Figs. 3A to 3C are graphs showing a change with age of the heat generation rate determined in the manner mentioned above, with respect to three cases in which needle lift patterns (fuel injection amounts) are different from each other. As shown in Figs. 3A to 3C, after the heat generation rate indicates a great value in a positive direction in correspondence to the combustion of the main injection fuel, the heat generation rate becomes 0 in correspondence to the end of the diffusing combustion. Accordingly, it is possible to determine the diffusing combustion end timing on the basis of a timing $t_1$ in which the heat generation rate becomes substantially 0. In this case, in Figs. 3A to 3C, $A_1$ to $A_3$ (broken lines) respectively show a heat generation rate (heat generation rate in accordance with F/UP) in accordance with the combustion of the post injection fuel.

In accordance with this embodiment, the post injection timing is set so that the combustion of the post injection fuel is started near the timing $t_1$ previously determined in the manner mentioned above. The post injection timing is set, with taking an ignition lag time $\tau_F$ (for example, between 0.4 and 0.7 ms) previously set on the basis of the operation state into consideration, to be the ignition lag time $\tau_F$ earlier than t1. The ignition lag time $\tau_F$ is different in correspondence to an engine displacement and a fuel injection pressure, and becomes between about 0.4 and 0.7 ms in the case that the injection pressure is between 50 and 20 MPa in a 100 to 3000 cc class engine (which is different in correspondence to the operation state).

In this case, the ignition lag time $\tau_F$ of the post injection fuel is longer than an ignition lag time $\tau_{main}$ (about 0.1 (at a time of high rotation) to 0.3 ms (at a time of low rotation)) of the main injection executed near the top dead center of the compression stroke, however, this is because the post injection is executed at a time when the cylinder temperature after the top dead center of the compression is comparatively low.

Further, an injection driving signal to the fuel injector 5 is stored in the ECU in addition to the ignition lag times $\tau_F$ and $\tau_{main}$, and with taking a reactive time (a drive lag time) between an ignition valve opening and closing signal and an actual injection start or stop.

The diffusing combustion end timing changes in correspondence to the operation state of the engine, and there is a tendency that the diffusing combustion end timing is behind time in accordance that the engine load or the engine speed is increased. For example, in the case of the middle load and middle rotation in which the engine speed is controlled to 2000 rpm and an average effective pressure Pe is controlled to 0.57 MPa, when computing the heat generation rate within the combustion chamber 4 in a thermodynamic manner on the basis of a pressure change within the cylinder corresponding to the crank angle and a volume change of the cylinder so as to form a graph, the graph in Fig. 3B is obtained. In this case, there is generated a heat generation Y in accordance with a premix combustion of the main injection fuel injected near the compression top dead center of the piston, and a heat generation K in accordance with the diffusing combustion having the same level. Then, it is confirmed that the diffusing combustion is ended at a timing $t_1$ about 0.5 ms retarded from about ATDC 35°CA.

On the contrary, for example, at a time having a high load and a high rotation in which the engine speed is controlled to 2500 rpm, and the average effective pressure Pe is controlled to 0.9 MPa, a heat generation K in accordance with the diffusing combustion is produced for quite long period in comparison with the heat generation Y in accordance with the premix combustion of the main injection fuel, as shown in Fig 3C. In this case, it is confirmed that the diffusing combustion is ended at a very late timing $t_1$ which is about 0.7 ms retarded from about ATDC 47°CA.

In this case, for example, at a time having a low load and a low rotation in which the engine speed is controlled to 1500 rpm, and the average effective pressure Pe is controlled to 0.3 MPa, it is hard to section the premix combustion of the main injection fuel and the diffusing combustion in correspondence to the heat generating state, as shown in Fig. 3A. In this case, it is confirmed that the combustion is ended at a comparatively early timing $t_1$ which is about 0.6 ms retarded from about ATDC 30°CA.

Next, a description will be given of a soot reducing effect caused by starting the post injection near the diffusing combustion end timing.

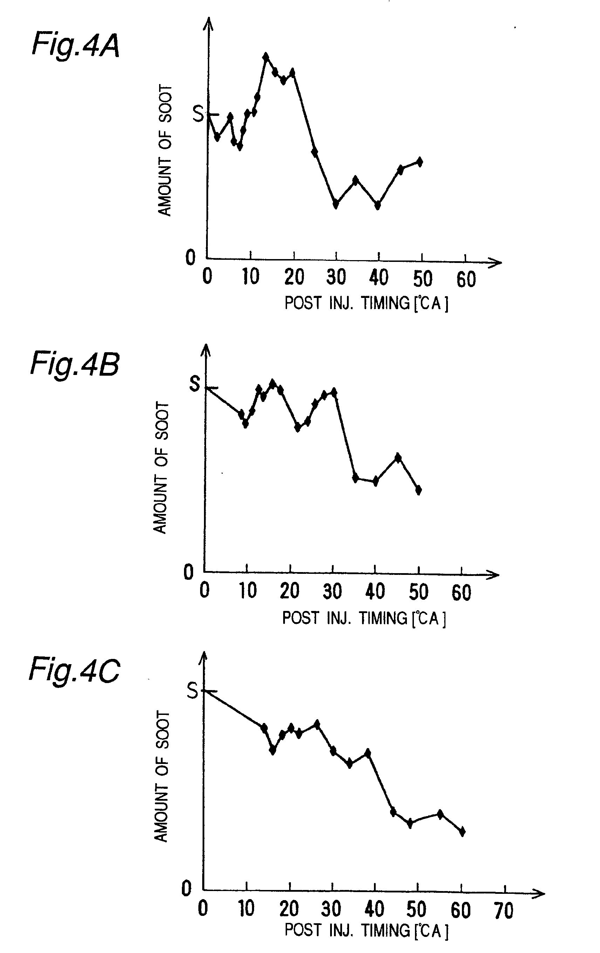

Fig. 4A shows a result obtained by measuring the generating amount of soot by various changing the post injection timing after the main injection at a time having a low load and a low rotation of the engine in which the engine speed is controlled to 1500 rpm and the average effective pressure Pe is controlled to 0.3 MPa. As shown in Fig. 4A, in the case of setting the post injection timing to be later than the ATDC 30°CA after the main injection, the generating amount of soot is significantly reduced.

Fig. 4B shows a result obtained by measuring the generating amount of soot by variously changing the post injection timing after the main injection at a time having a middle load and a middle rotation in which the engine speed is controlled to 2000 rpm and the average effective pressure Pe is controlled to 0.57 MPa. As shown in Fig. 4B, in the case of setting the post injection timing to be later than the ATDC 35°CA after the main injection, the generating amount of soot is significantly reduced.

Fig. 4C shows a result obtained by measuring the generating amount of soot by variously changing the post injection timing after the main injection at a time having a high load and a high rotation in which the engine speed is controlled to 2500 rpm and the average effective pressure Pe is controlled to 0.9 MPa. As shown in Fig. 4C, in the case of setting the post injection timing to be later than the ATDC 47° after the main injection, the generating amount of soot is significantly reduced. In addition, in the measurement mentioned above, the engine load is set to be fixed, and the rate of the post injection fuel amount with respect to the main injection fuel amount is set to 20 %.

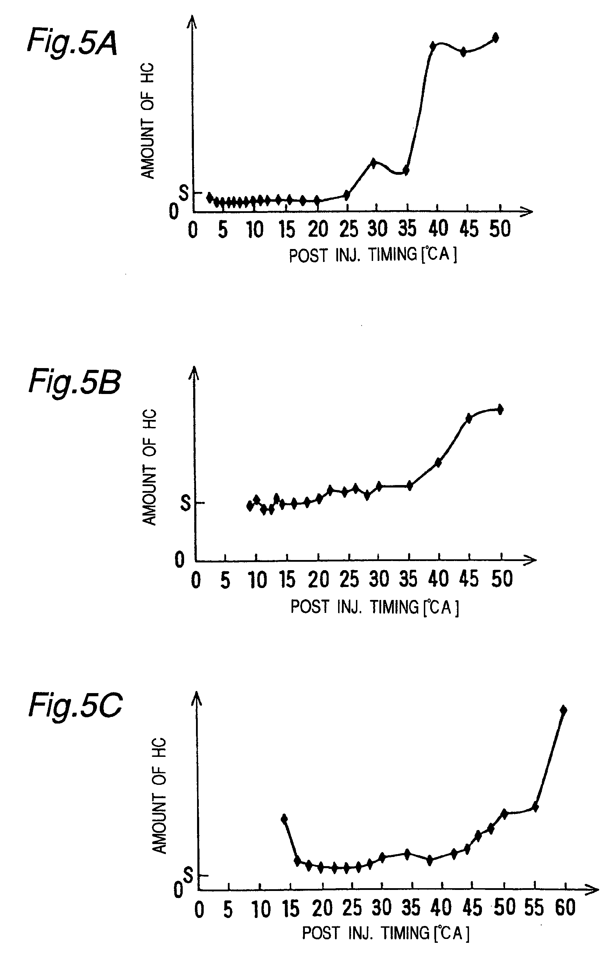

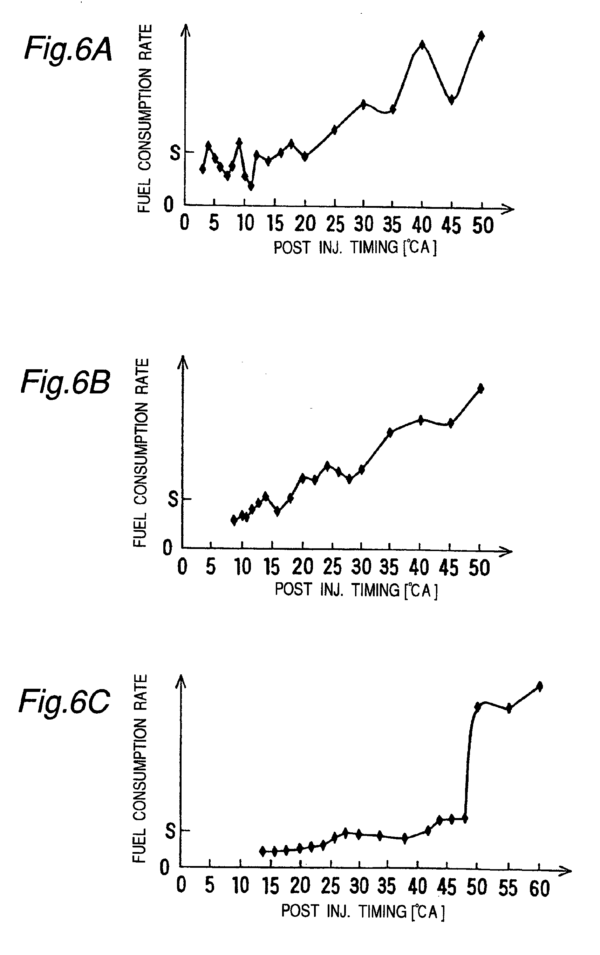

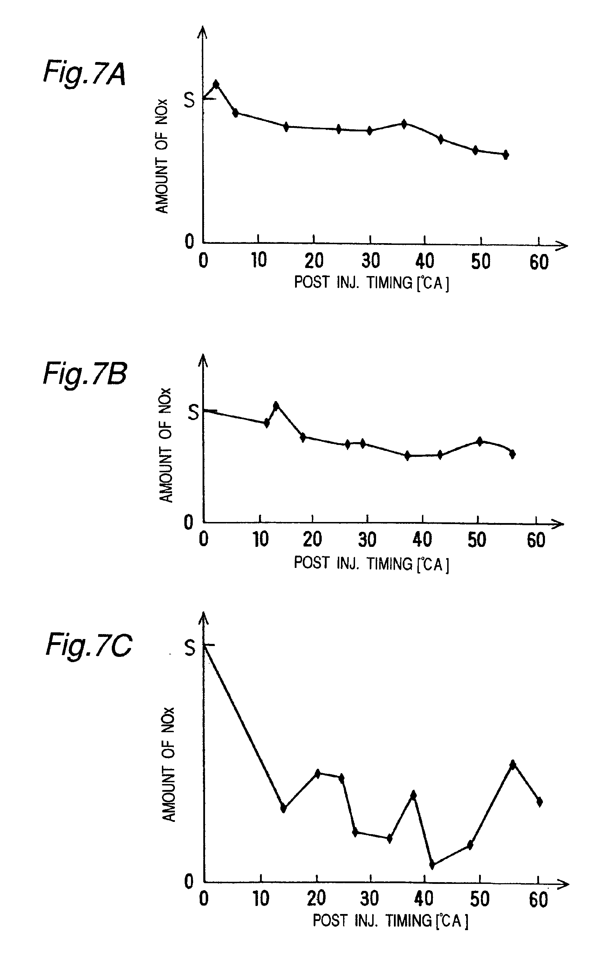

In Figs. 4A to 4C, reference symbol S in a vertical axis indicates a generating amount of soot in the case that the post injection is not executed (hereinafter, refer to as a "reference value"). In addition, the same matter is applied to the case of an HC amount (Fig. 5), a rate of specific fuel consumption (Fig. 6) and NOx amount (Fig. 7) which will be described later.

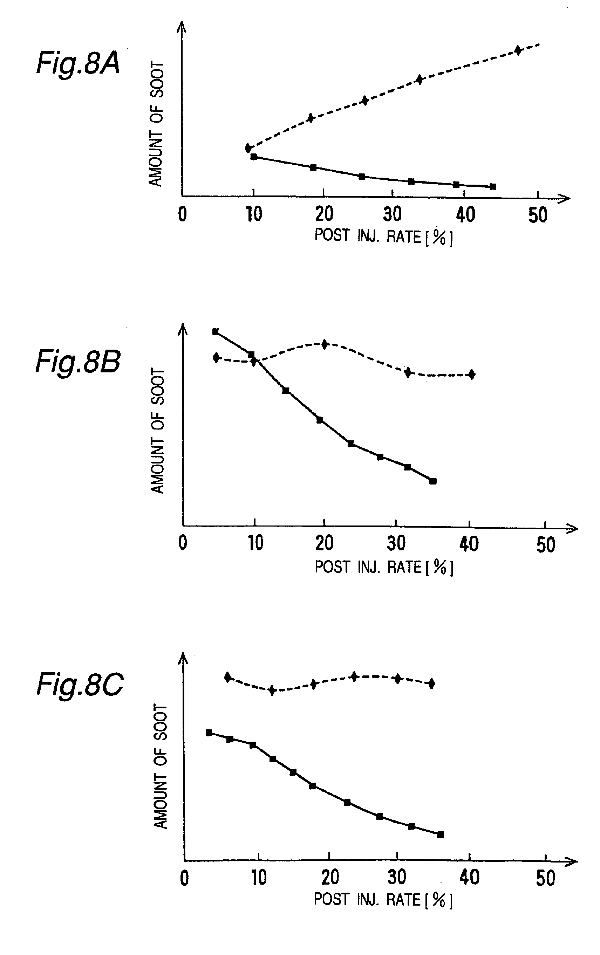

A solid line graph in Fig. 8A shows a result obtained by measuring the generating amount of soot by variously changing a rate of post injection fuel amount with respect to a main injection fuel amount (hereinafter, refer to as an "post injection rate") within a range between 10 and 45 %, in the case that the post injection is executed at the timing of ATDC 30°CA which is considered to be a timing an ignition lag advanced from a timing near the diffusing combustion end timing of the main injection fuel, at a time having the low load and the low rotation in which the engine speed is controlled to 1500 rpm and the average effective pressure Pe is controlled to 0.3 MPa. As shown by the solid line in Fig. 8A, the generating amount of soot is reduced in correspondence to an increase of the post injection rate. On the contrary, as shown by a broken line in Fig. 8A, in the case that the post injection is executed at a timing of ATDC 8°CA which is considered to be a timing before the diffusing combustion end timing, the generating amount of soot is increased in correspondence to the increase of the rate of post injection amount.

Fig. 8B shows a result obtained by measuring the generating amount of soot in the same manner as that of the case in Fig. 8A in the case that the post injection is executed at the timing of ATDC 35°CA which is considered to be a timing the ignition lag advanced from the timing near the diffusing combustion end timing and at a timing of ATDC 20°CA which is considered to be a timing before the diffusing combustion end timing, at a time having the middle load and the middle rotation in which the engine speed is controlled to 2000 rpm and the average effective pressure Pe is controlled to 0.57 MPa.

Fig. 8C shows a result obtained by measuring the generating amount of soot in the same manner as that of the case in Fig. 8A in the case that the post injection is executed at the timing of ATDC 48°CA which is considered to be a timing the ignition lag advanced from the timing near the diffusing combustion end timing and at the timing of ATDC 20°CA which is considered to be a timing before the diffusing combustion end timing, at a time having the high load and the high rotation in which the engine speed is controlled to 2500 rpm and the average effective pressure Pe is controlled to 0.9 MPa.

As is apparent from Figs. 8B and 8C, there is obtained a result having the same tendency as that of the case at a time having the low load and the low rotation shown in Fig. 8A.

In accordance with the result of measurement mentioned above, when setting the post injection timing on the basis of the diffusing combustion end timing of the main injection fuel and igniting the post injection fuel at the diffusing combustion end timing or near the same, it is known that the post injection is executed in a state in which carbon and oxygen existing within the combustion chamber 4 are sufficiently mixed, the carbon is effectively burned, and the discharge amount of soot from the combustion chamber 4 to the exhaust passage 20 is reduced.

The diffusing combustion end timing changes in correspondence to the engine load, the engine speed or the like. Accordingly, for example, it is possible to set the timing $t_1$ in which the heat generating rate due to the diffusing combustion becomes 0 as shown in Fig. 3A to 3C by making a map on the basis of various experiments in which the operating states of the engine are respectively different, and reading out from the map.

Further, the structure may be made such that there is provided with a combustion state judging section for judging a diffusing combustion state on the basis of a detection signal of a temperature sensor detecting the temperature within the combustion chamber 4, a detection signal of a combustion light sensor, a detection signal of a sensor for detecting an amount of hydrogen, hydro carbon or the like having high reactivity in which an electric charge existing within the combustion chamber 4 is biased, or the like. In this case, the structure may be made such as to determined the diffusing combustion end timing by judging whether or not the temperature after the main injection becomes a low temperature equal to or lower than a predetermined temperature, whether or not an emission of the combustion light is lost, whether or not the amount of hydrogen or hydro carbon is suddenly reduced, or the like, by means of the combustion state judging means, and to set the post injection timing in the next combustion cycle on the basis thereof. Further, the structure may be made such as to judge the diffusing combustion end timing by calculating a differential value of a value obtained by subtracting an adiabatic expansion temperature from a cylinder temperature detected by the temperature sensor, and detecting a timing when the differential value becomes 0 from a negative value.

As mentioned above, when setting a start timing of post fuel injection in correspondence to the respective operation states so that the combustion of poset injection fuel is started at a timing near the diffusing combustion end timing (within $\pm5°$ of the crank angle), preferably immediately after the diffusing combustion ends, on the basis of the diffusing combustion end timing judged on the basis of the operation state of the engine, it is possible to execute the post injection at an optimum timing in correspondence to the operation state of the engine, and it is possible to effectively reduce the discharge amount of soot.

A description will be given below of a NOx reducing effect caused by the fuel injection control of the engine.

Fig. 5A shows a result obtained by measuring the HC amount by variously changing the post injection timing within a range between ATDC 2.5 and $50°$CA after the main injection at a time having a low load and a low rotation of the engine in which the engine speed is controlled to 1500 rpm and the average effective pressure Pe is controlled to 0.3 MPa. As shown in Fig. 5A, in the case of setting the post injection timing to be later than the ATDC $30°$CA after the main injection, the HC amount is significantly increased.

Fig. 5B shows a result obtained by measuring the HC amount by variously changing the post injection timing at a time having a middle load and a middle rotation in which the engine speed is controlled to 2000 rpm and the average effective pressure Pe is controlled to 0.57 MPa. As shown in Fig. 5B, in the case of setting the post injection timing to be later than the ATDC $35°$CA after the main injection, the HC amount is significantly increased.

Fig. 5C shows a result obtained by measuring the HC amount by variously changing the post injection timing at a time having a high load and a high rotation in which the engine speed is controlled to 2500 rpm and the average effective pressure Pe is controlled to 0.9 MPa. As shown in Fig. 5C, in the case of setting the post injection timing to be later than the ATDC $45°$CA after the main injection, the HC amount is significantly increased. In the measurement mentioned above, the engine load is set to be fixed, and the rate of the post injection fuel amount with respect to the main injection fuel amount is set to 20 %.

In this case, in Figs. 5A to 5C, reference symbol S in a vertical axis indicates a reference value of the HC amount.

In accordance with the result of measurement mentioned above, in the case that the post injection is executed after ATDC $30°$CA of the main injection, it is found that the HC amount is increased and an amount of hydrogen, hydro carbon or the like having high reactivity is increased, whereby the discharge amount of Raw NOx from the combustion chamber 4 to the discharge passage 20 can be reduced

Figs. 6A to 6C respectively show results obtained by measuring a specific fuel consumption rate (specific fuel consumption) by variously changing the post injection timing at the timing having the low load and the low rotation, the timing having the middle load and the middle rotation and the timing having the high load and the high rotation. In this case, in Figs. 6A to 6C, reference symbol S in a vertical axis indicates a reference value of the specific fuel consumption rate. As shown in Figs. 6A to 6C, it is known that the specific fuel consumption rate is deteriorated in accordance that the post injection timing is behind time. This is because the post injection fuel does not contribute to an improvement of engine output in accordance that the post injection timing is behind time. Accordingly, in order to prevent the specific fuel consumption from being deteriorated, it is preferable to set the post injection timing before the ATDC $60°$CA after the main injection. Therefore, it is possible to effectively prevent the NOx from being discharged into the atmospheric air so as to purify the exhaust gas without deteriorating the specific fuel consumption performance, for example, by executing the post injection at the predetermined timing within the range between ATDC 30 and $60°$CA after the main injection.

Figs. 7A to 7C respectively show results obtained by measuring an NOx discharge amount by variously changing the post injection timing at the timing having the low load and the low rotation, the timing having the middle load and the middle rotation and the timing having the high load and the high rotation. In this case, in Figs. 7A to 7C, reference symbol S in a vertical axis indicates a reference value of the NOx discharge amount. As shown in Figs. 7A to 7C, it is possible to effectively prevent the NOx from being discharged into the atmospheric air so as to purify the exhaust gas without deteriorating the specific fuel consumption by executing the post injection at the predetermined timing within the range between ATDC 30 and 60°CA after the main injection. In the measurement mentioned above, an exhaust gas circulating rate is controlled to be fixed. When the circulating control of the exhaust gas is executed by the exhaust gas circulation control means 39, a generating amount of Raw NOx is changed on the basis of the EGR effect due to an exhaust pressure increase generated by the post injection, so that it becomes hard to accurately confirm a reducing effect of Raw NOx due to the post injection.

In this case, the post injection timing may be set in correspondence to a time set on the basis of a timer, in place of being set in correspondence to the crank angle. In this case, it is possible to effectively prevent the NOx from being discharged into the atmospheric air without deteriorating the specific fuel consumption, by executing the post injection at a predetermined timing within a range between 1.2 and 4 ms after the compression top dead center after the main injection.

As mentioned above, in accordance with the fuel injection control of the engine, it is possible to achieve both of reduction of the soot generating amount and the NOx generating amount, and it is possible to improve the specific fuel consumption performance by setting the post injection timing on the basis of the diffusing combustion end timing after the main injection. For example, in the case that the engine speed is 1500 rpm and the load is low, the diffusing combustion end timing is a timing about 0.5 ms retarded from the ATDC 30°CA. Accordingly, in order to reduce the generating amount of soot and the generating amount of NOx, the post injection timing may be set near the ATDC 30°CA, for example, to the ATDC 27 to 35°CA, and the optimum timing is the ATDC 30°CA.

In the case that the engine speed is 2000 rpm and the load is middle, the diffusing combustion end timing is a timing about 0.5 ms retarded from the ATDC 35°CA. Accordingly, the post injection timing may be set near the ATDC 35°CA, for example, to the ATDC 33 to 40°CA, and the optimum timing is the ATDC 35°CA.

Further, in the case that the engine speed is 2500 rpm and the load is high, the diffusing combustion end timing is a timing about 0.7 ms retarded from the ATDC 47°CA. Accordingly, the post injection timing may be set near the ATDC 47°CA, for example, to the ATDC 45 to 48°CA, and the optimum timing is the ATDC 47°CA.

Further, in this diesel engine provided with the exhaust turbo supercharger 25 driven by the exhaust gas so as to supercharge the intake air, when a predetermined amount of fuel is injected after the main injection in the manner mentioned above, the exhaust gas pressure is increased and a supercharging operation of the exhaust turbo supercharger 25 is increased. As a result, an amount of fresh air introduced within the combustion chamber 4 is increased, whereby the combustion of carbon existing within the combustion chamber 4 is promoted, and the generation of soot is effectively restricted. Further, when an amount of intake air is increased by the supercharging operation of the exhaust turbo supercharger 25, the diffusing combustion end timing of the main injection fuel tends to be early. Accordingly, it is possible to effectively restrict the generation of soot so as to further reduce an introduction amount of soot discharged to the exhaust passage 20, by compensating the post injection timing in correspondence to the diffusing combustion end timing.

Further, an exhaust gas circulating means 33 for circulating a part of the exhaust gas to an intake system is provided in this diesel engine provided with the exhaust turbo supercharger 25. In this case, in the case of feedback control a circulating rate of the exhaust gas so as to follow a target value by an exhaust gas circulation control means 39 provided in the ECU 35, when the amount of intake air is increased due to the supercharging operation of the exhaust turbo supercharger 25, an amount of the exhaust gas circulated to the intake system is increased in correspondence thereto. Accordingly, the discharge amount of Raw NOx from the combustion chamber 4 to the exhaust gas passage 20 is further effectively reduced.

Further, in the case that the NOx trap catalyst within the exhaust gas purifying apparatus 22 interposed in the exhaust gas passage 20 is in an inactive state, it is possible to simultaneously obtain an operation of increasing an amount of hydrogen or the like having a high reactivity within the combustion chamber 4 so as to reduce the Raw NOx, and an operation of promoting the combustion of carbon so as to reduce the discharge amount of soot, as mentioned above, by executing the control of setting the post injection timing on the basis of the diffusing combustion end timing.

In particular, in the case that the NOx trap catalyst is in an active state, the post injection timing is set to a timing in which an amount of reducing agent supplied to the NOx trap catalyst can be sufficiently secured, that is, a predetermined timing within the range between ATDC 60° and 180°CA, and on the contrary, in the case that the NOx trap catalyst is in the inactive state, the post injection may be executed in correspondence to the diffusing combustion end timing by advancing the post injection timing. In accordance with this structure, at a time when the NOx trap catalyst is activated, it is possible to restrict the discharge of NOx into the atmospheric air on the basis of the purifying operation. On the other hand, at a time when the NOx trap catalyst is inactive, it is possible to effectively reduce the NOx discharge amount from the combustion chamber 4 to the exhaust gas passage 20 by increasing the amount of hydrogen having a high reactivity within the combustion chamber 4.

As shown by the solid lines in Figs. 8A to 8C previously described, in accordance with the corresponding relation between the post injection rate on the basis of the experiment and the soot generating amount, it is known that it is possible to restrict the generation of soot in accordance that the post injection rate is made large, in any operation states comprising the low load and low rotation, the middle load and middle rotation, and the high load and high rotation.

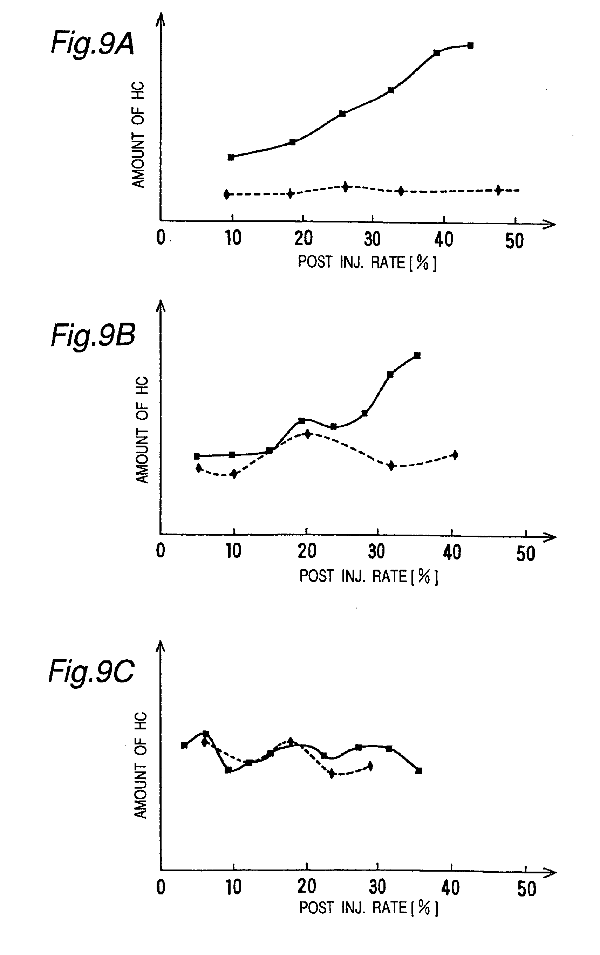

Fig. 9A shows a result obtained by measuring the HC amount by variously changing a rate of post injection, in the case that the post injection is executed at the timing of ATDC 30°CA and the timing of ATDC 8°CA, at a time having the low load and the low rotation in which the engine speed is controlled to 1500 rpm and the average effective pressure Pe is controlled to 0.3 MPa. As shown by a solid line in Fig. 9A, in the case that the post injection is executed at the timing of ATDC 30°CA near the diffusing fuel end timing, the HC amount is increased in correspondence to an increase of the post injection rate. On the contrary, as shown by a broken line in Fig. 9A, in the case that the post injection is executed at a timing of ATDC 8°CA which is a timing quite before the diffusing combustion end timing, the HC amount is hardly changed.

Fig. 9B shows a result obtained by measuring the HC amount in the same manner as that of the case in Fig. 9A in the case that the post injection is executed at the timing of ATDC 35°CA and at the timing of ATDC 20°CA, at a time having the middle load and the middle rotation in which the engine speed is controlled to 2000 rpm and the average effective pressure Pe is controlled to 0.57 MPa. In this case, as shown by a solid line in Fig. 9b, in the case that the post injection is executed at the timing of ATDC 35°CA near the diffusing fuel end timing, the HC amount is increased in correspondence to an increase of the post injection rate. On the contrary, as shown by a broken line in Fig. 9B, in the case that the post injection is executed at the timing of ATDC 20°CA which is a timing quite before the diffusing combustion end timing, the HC amount is not simply increased or reduced with respect to the post injection rate.

Fig. 9C shows a result obtained by measuring the HC amount in the same manner as that of the case in Fig. 9A in the case that the post injection is executed at the timing of ATDC 48°CA and at the timing of ATDC 20°CA, at a time having the high load and the high rotation in which the engine speed is controlled to 2500 rpm and the average effective pressure Pe is controlled to 0.9 MPa. In this case, in both cases, the HC amount is not simply increased or reduced with respect to the post injection rate.

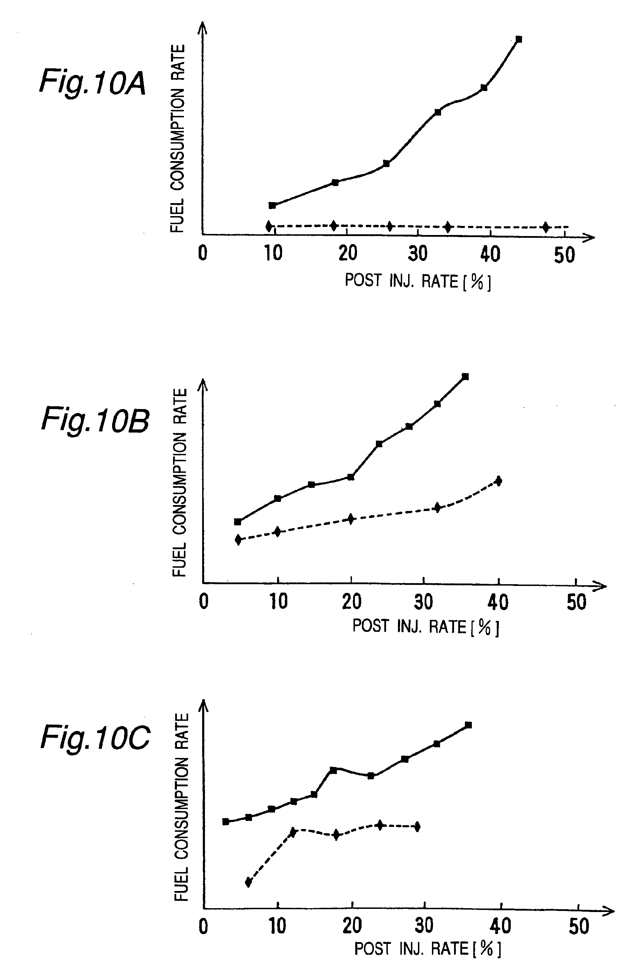

Fig. 10A shows a result obtained by measuring the specific fuel consumption rate by variously changing the post injection rate, in the case that the post injection is executed at the timing of ATDC 30°CA and the timing of ATDC 8°CA, at a time having the low load and the low rotation in which the engine speed is controlled to 1500 rpm and the average effective pressure Pe is controlled to 0.3 MPa. As shown by a broken line in Fig. 10A, in the case that the post injection is executed at the timing of ATDC 8°CA which is quite before the diffusing fuel end timing, the specific fuel consumption rate is hardly changed with respect to the increase of the post injection rate. On the contrary, as shown by a solid line in Fig. 10A, in the case that the post injection is executed at the timing of ATDC 30°CA in which the combustion of the post injection fuel is considered to be executed near the diffusing combustion end timing, the specific fuel consumption rate is significantly deteriorated in correspondence to the increase of the post injection rate.

Fig. 10B shows a result obtained by measuring the specific fuel consumption in the same manner as that of the case in Fig. 10A in the case that the post injection is executed at the timing of ATDC 35°CA and at the timing of ATDC 20°CA, at a time having the middle load and the middle rotation in which the engine speed is controlled to 2000 rpm and the average effective pressure Pe is controlled to 0.57 MPa.

Fig. 10C shows a result obtained by measuring the specific fuel consumption in the same manner as that of the case in Fig. 10A in the case that the post injection is executed at the timing of ATDC 48°CA and at the timing of ATDC 20°CA, at a time having the high load and the high rotation in which the engine speed is controlled to 2500 rpm and the average effective pressure Pe is controlled to 0.9 MPa.

Accordingly, when the structure is made such that the post injection timing is set on the basis of the diffusing combustion end timing, and the post injection fuel is ignited at the diffusing combustion end timing or near the same, it is possible to effectively reduce the generating amount of soot without deteriorating the specific fuel consumption by setting the post injection fuel amount to 0.2 to 50 % of the total fuel injection amount, preferably within the range between 15 and 30 %.

In this case, in accordance with this embodiment, the structure is made such that the post injection is executed in correspondence to the activated state of the NOx trap catalyst, or the engine load and the engine speed, however, an aspect of achieving the post injection is not limited to this, and various modifications can be employed. For example, the structure may be made such that the post injection of the fuel is executed in all the operation state of the engine.

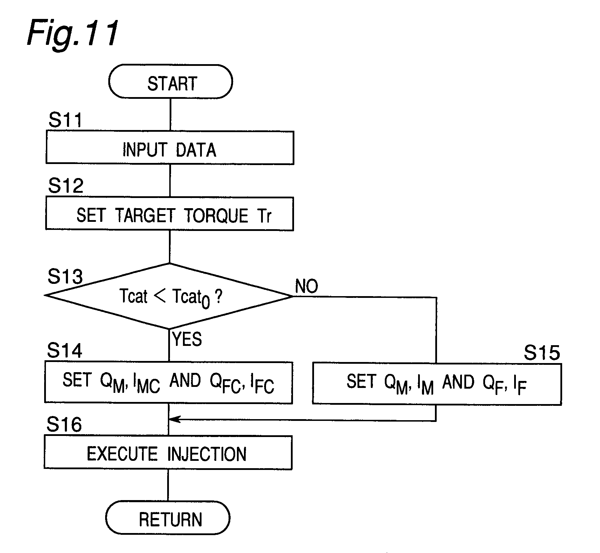

A description will be given below of a control routine for increasing the post injection fuel amount in the cold state (at a time when the exhaust gas purifying catalyst is not activated) more than that in the warm state (at a time when the exhaust gas purifying catalyst is activated), in the fuel injection control of the engine, with reference to a flow chart shown in Fig. 11.

As shown in Fig. 11, in this control routine, at first various kinds of data are input in Step S11, and thereafter a target torque Tr is set on the basis of an accelerator opening degree and a vehicle speed in Step S12. In this case, the target torque Tr is set so as to be larger in accordance with an increase of accelerator opening degree, and an increase of vehicle speed.

Next, it is judged in Step S13 whether or not a temperature Tcat of the NOx trap catalyst within the exhaust gas purifying apparatus 22 (hereinafter, refer simply to as a "catalyst temperature Tcat") is lower than an activation temperature Tcat0. In this case, when the catalyst temperature Tcat is lower than the activation temperature Tcat0 (YES), a fuel injection condition for a time when catalyst is inactive (hereinafter, refer to as a "cold time") is set in Step S14. On the contrary, when the catalyst temperature Tcat is equal to or more than the activation temperature Tcat0 (NO), a fuel injection condition for a time when the catalyst is active (hereinafter, refer to as a "normal time") is set in Step S15.

In this case, in place of this structure, the structure may be made such that when a cooling water temperature of the engine (an engine temperature) is lower than a set value (that is, in the cold state), a fuel injection condition for a cold state (for a cold time) is set in Step S14, and when the cooling water temperature of the engine (the engine temperature) is equal to or more than the set value (that is, in the warm state), a fuel injection condition for a warm state (for a normal time) is set in Step S15. Further, in the following description, controls or judgements executed on the basis of the catalyst temperature Tcat can be all executed on the basis of the cooling water temperature of the engine (the engine temperature) in the same manner as that mentioned above.

In particular, in Step S14, a main injection fuel amount $Q_M$ (which is the same between the cold time and the normal time), a main injection timing $I_{MC}$ for the cold time, a post injection fuel amount $Q_{FC}$ for the cold time, and an post injection timing $I_{FC}$ for the cold time are set.

On the contrary, in Step S15, the main injection fuel amount $Q_M$, a main injection timing $I_M$ for the normal time, an post injection fuel amount $Q_F$ for the normal time, and a post injection timing $I_F$ for the normal time are set.

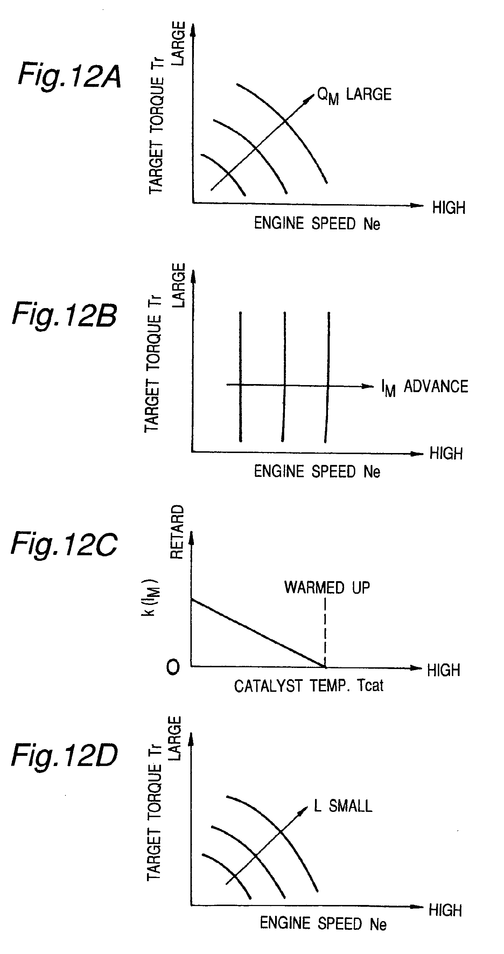

As shown in Fig. 12A, the main injection fuel amount $Q_M$ is set in correspondence to the engine speed Ne and the target torque Tr. In this case, the main injection fuel amount $Q_M$ is set so as to become great as the engine speed Ne is higher, or the target torque Tr is larger.

As shown in Fig. 12B, the main injection timing $I_M$ for the normal time is set in correspondence to the engine speed Ne and the target torque Tr, however, a dependency upon the target torque Tr is very small. Accordingly, the main injection timing $I_M$ for the normal time is substantially dependent only upon the engine speed Ne, and is set so as to be advanced in accordance with an increase of engine speed Ne. Because the injection timing is retarded (the injection is too late) if the injection timing is not advanced when the engine speed Ne is high.

The main injection timing $I_{MC}$ for the cold time is set in accordance with the following formula 8.

$$I_{MC} = I_M + k(I_M) \hspace{4cm} \text{formula 8}$$

In the formula 8, $k(I_M)$ is a main injection timing compensating value dependent upon the catalyst temperature Tcat.

As shown in Fig. 12C, the main injection timing compensating value $k(I_M)$ is set to be reduced (advanced) in correspondence to the increase of the catalyst temperature Tcat when being equal to or less than a predetermined reference temperature corresponding to the warming-up completion of the engine, and to be 0 when being over the reference temperature. That is, at the cold time, the main injection timing is retarded as the catalyst temperature Tcat is low.

Further, the post injection timing $I_F$ at the normal time is previously set on the basis of the main injection timing $I_M$ for the normal time. In this case, the post injection timing $I_F$ for the normal time is preferably set so that the post injection fuel starts combustion near the main injection combustion end timing.

On the other hand, the post injection timing $I_{FC}$ for the cold time is set in accordance with the following formula 9.

$$I_{FC} = I_F - L \hspace{4cm} \text{formula 9}$$

In the formula 9, reference symbol L denotes a post injection timing compensating value which is dependent upon the engine speed Ne and the target torque Tr.

As shown in Fig. 12D, the post injection timing compensating value L is set so as to become a small value (advanced) as the engine sped Ne is high or the target torque Tr is large. That is, in a region in a side having the high load and the high rotation in which the supercharging rate of the exhaust turbo supercharger 25 becomes high, the post injection timing is advanced. That is, at the cold time, the post injection timing is advanced (a period between the main injection timing and the post injection timing becomes short). In the case of increasing the intake air amount (intake oxygen amount) by the exhaust turbo supercharger 25, the main injection combustion end timing is advanced. Accordingly, the structure is made such as to advance the post injection timing in correspondence to the advance of the main injection combustion end timing so as to start the combustion of the post injection fuel near the main injection combustion end timing. Therefore, it is possible to effectively restrict the generation of HC and soot.

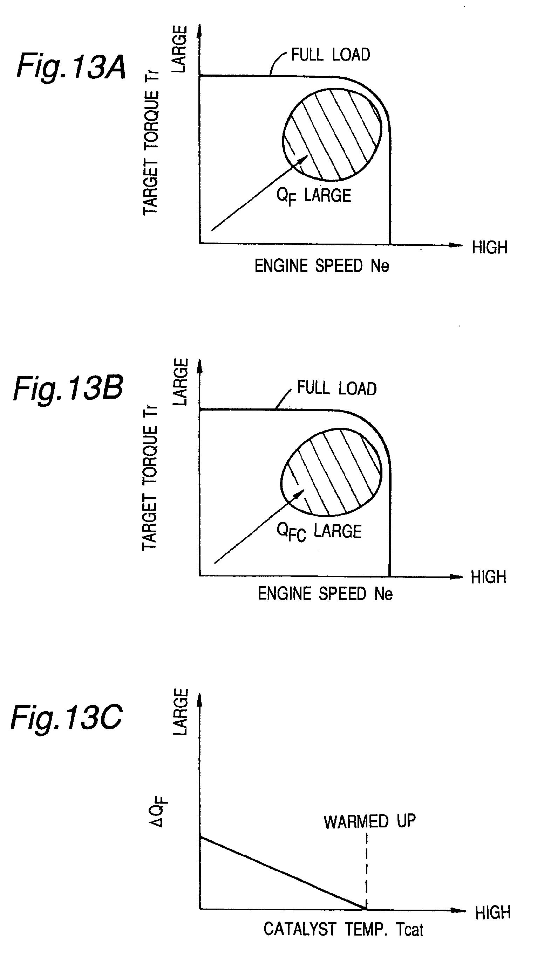

As shown in Fig. 13A, the post injection fuel amount $Q_F$ for the normal time is set in correspondence to the engine speed Ne and the target torque Tr. In this case, the post injection fuel amount $Q_F$ for the normal time is set so as to be increased as the engine speed Ne is high or the target torque Tr is large. In this case, a hatched area in Fig. 13A, that is, an area having a high load and a high rotation shows an area in which the HC and the soot are easily generated particularly. Since the post injection fuel amount $Q_F$ after the normal time is set so as to be large as the engine speed Ne is high and the target torque Tr is large, it is possible to effectively restrict the generation of HC and soot even in the area having the high load and the high rotation.

As shown in Fig. 13B, the post injection fuel amount $Q_{FC}$ for the cold time is also set in correspondence to the engine speed Ne and the target torque Tr (in this case, $Q_{FC} > Q_F$). In this case, the post injection fuel amount $Q_{FC}$ for the cold time is set so as to be large as the engine speed Ne is high and the target torque Tr is large. In this case, a hatched area in Fig. 13B, that is, an area having a high load and a high rotation shows an area in which the HC and the soot are easily generated particularly.

In more detail, the post injection fuel amount $Q_{FC}$ for the cold time is set in accordance with the following formula 10.

$$Q_{FC} = Q_F + \Delta Q_F \hspace{4cm} \text{formula 10}$$

In Fig. 10, $\Delta Q_F$ is a post injection fuel amount compensating value which is dependent upon the catalyst temperature Tcat.

As shown in Fig. 13C, the post injection fuel amount compensating value $\Delta Q_F$ is set so as to be reduced (an injection amount is reduced) in correspondence to the increase of the catalyst temperature Tcat, at a temperature equal to or less than a predetermined reference temperature corresponding to the warming-up completion of the engine, and to become 0 when being over the reference temperature. That is, at the cold time, the post injection fuel amount is increased as the catalyst temperature Tcat is low. In the manner mentioned above, the fuel injection amount in accordance with the post injection is increased in comparison with the normal time. Accordingly, at the cold time, the exhaust gas temperature is increased by the combustion heat of the post injection fuel, and the warming-up of the engine, the temperature increase or the activation of the NOx trap catalyst are promoted.

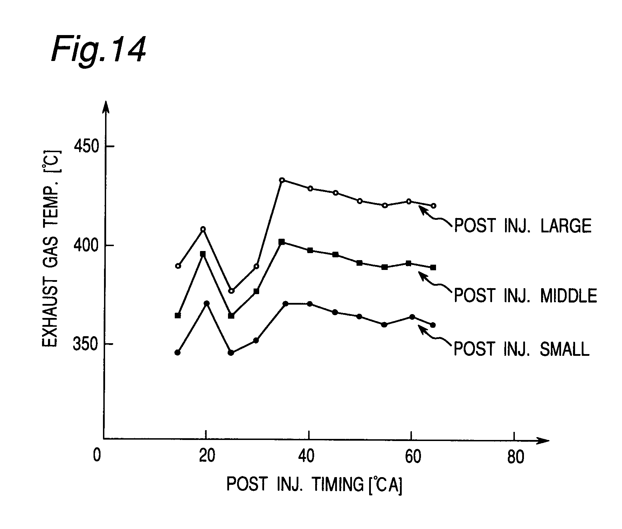

Fig. 14 shows a result obtained by actually measuring the post fuel injection amount and the dependency upon the post injection timing of the exhaust gas temperature by variously changing the post fuel injection amount and the post injection timing (the crank angle after the compression top dead center) while controlling and maintaining the engine in the state having the middle load and the middle rotation in which the engine speed is 2000 rpm and the average effective pressure Pe is 0.5 MPa.

As shown from Fig. 14, the exhaust gas temperature becomes highest at a time when the post injection timing is near 35°CA after the compression top dead center substantially coinciding with the end timing of the main combustion without relation to a magnitude of the post injection fuel amount. Further, when the post injection timing is retarded therefrom, the exhaust gas temperature is slowly reduced. Accordingly, when setting the post injection timing near 36°CA after the compression top dead center, it is possible to most effectively increase the exhaust gas temperature. In this case, in the case that the post injection timing is the same, as a matter of course, the exhaust gas temperature is increased as the post injection fuel amount is increased.

In the manner mentioned above, after the fuel injection amount and the fuel injection timing are set in Step S14 or Step S15, the fuel injection is executed in Step S16. Thereafter, it goes back to Step S11.

As mentioned above, in accordance with the present invention, it is possible to provide the fuel injection apparatus of the diesel engine which can intend to warm up the engine or increase the temperature of and activate the exhaust gas purifying catalyst on the basis of the post injection, while effectively restricting the generation of HC and soot.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

**1.**   A fuel injection apparatus of a diesel engine comprising:

a fuel injector for injecting a fuel into a combustion chamber;

a main injection device for executing a main injection by causing said fuel injector to inject the fuel so that a main combustion occurs near a top dead center of a compression stroke; and

a post injection device for executing a post injection by causing said fuel injector to inject the fuel on the basis of a timing at which the combustion of the fuel injected in accordance with the main injection ends at a predetermined timing within a period from the main injection to an expansion stroke, **characterized in that** said post injection device increases a fuel injection amount of the post injection in a cold state rather than in a warm state.

2. The fuel injection apparatus of the diesel engine according to claim 1, **characterized in that** said post injection device executes the post injection so that the fuel injected in accordance with the post injection starts to burn near a timing at which the combustion of the fuel injected in accordance with the main injection ends.

3. The fuel injection apparatus of the diesel engine according to claim 1 or 2, **characterized in that** said diesel engine is provided with a turbo supercharger.

4. The fuel injection apparatus of the diesel engine according to claim 3, **characterized in that** the main injection timing and the post injection timing are set so that a period between the main injection timing and the post injection timing becomes shorter in the cold state rather than in the warm state.

5. The fuel injection apparatus of the diesel engine according to any one of claims 1 to 4, **characterized in that** said main injection device retards the main injection timing in the cold state rather than in the warm state.

6. The fuel injection apparatus of the diesel engine according to any one of claims 1 to 5, **characterized in that** said post injection device executes the post injection only in the cold state.

7. The fuel injection apparatus of the diesel engine according to claim 2, **characterized in that** said post injection device executes the post injection so that the fuel injected in accordance with the post injection starts to burn within a predetermined period after the combustion of the fuel injected in accordance with the main injection ends.

# Fig.1

VACUUM PUMP

ACCEL. SENSOR

ECU

MAIN INJ. CONT. SEC.

POST INJ. CONT. SEC.

ACT STATE JUD. SEC.

EGR CONT. SEC.

## Fig.2

```
                    ( START )
                        |
                        |                    S1
              ┌─────────────────────┐
              │     INPUT DATA      │
              └─────────────────────┘
                        |                    S2
              ┌─────────────────────┐
              │    SET Q_M, I_M     │
              └─────────────────────┘
                        |
                        |                    S3
                  < STEADY STATE ? >──── NO ──┐
                        |                     │
                       YES                    │
                        |                     │
                  < ACTIVATING STATE ? >─ YES ┤      S4
                        |                     │
                       NO                     │      S5
                        |←──── YES ──< ≧ MIDDLE LOAD ? >
                        |                     │
                        |                    NO
                        |                     │      S6
                        |←──── YES ──< ≧ MIDDLE ROTATION ? >
                        |                     │
                        |                    NO    S7
              ┌─────────────────────┐         │
              │    SET Q_F, I_F     │         │
              └─────────────────────┘         │
                        |←────────────────────┘
                        |                    S8
              ┌─────────────────────────┐
              │ EXECUTE INJECTION CONTROL│
              └─────────────────────────┘
                        |
                    ( RETURN )
```

*Fig.3A*

NEEDLE LIFT

HEAT GENERATION RATE

A₁ (HEAT BY F/UP)

$\tau_{main}$   $\tau_F$   $t_1$   TIME

*Fig.3B*

NEEDLE LIFT

Y   K

HEAT GENERATION RATE

A₂ (HEAT BY F/UP)

$\tau_{main}$   $\tau_F$   $t_1$   TIME

*Fig.3C*

NEEDLE LIFT

Y   K

HEAT GENERATION RATE

A₃ (HEAT BY F/UP)

$\tau_{main}$   $\tau_F$   $t_1$   TIME

*Fig.4A*

*Fig.4B*

*Fig.4C*

*Fig.5A*

*Fig.5B*

*Fig.5C*

*Fig.6A*

*Fig.6B*

*Fig.6C*

*Fig.7A*

*Fig.7B*

*Fig.7C*

Fig.8A

Fig.8B

Fig.8C

Fig.9A

Fig.9B

Fig.9C

Fig.10A

Fig.10B

Fig.10C

# Fig.11

```
        ┌─────────────────┐
        │      START      │
        └─────────────────┘
                 │
S11 ┌────────────────────────────┐
    │         INPUT DATA         │
    └────────────────────────────┘
                 │
S12 ┌────────────────────────────┐
    │    SET TARGET TORQUE Tr     │
    └────────────────────────────┘
                 │
S13           ◇ Tcat < Tcat₀ ? ◇ ──── NO ──────────────┐
                 │ YES                                  │
S14 ┌────────────────────────────┐   S15 ┌────────────────────────────┐
    │ SET Q_M, I_MC AND Q_FC, I_FC │     │  SET Q_M, I_M AND Q_F, I_F   │
    └────────────────────────────┘     └────────────────────────────┘
                 │ ←────────────────────────────────────┘
S16 ┌────────────────────────────┐
    │     EXECUTE INJECTION       │
    └────────────────────────────┘
                 │
        ┌─────────────────┐
        │     RETURN      │
        └─────────────────┘
```

S13: $Tcat < Tcat_0$ ?

S14: SET $Q_M$, $I_{MC}$ AND $Q_{FC}$, $I_{FC}$

S15: SET $Q_M$, $I_M$ AND $Q_F$, $I_F$

*Fig.12A*

TARGET TORQUE Tr — LARGE
$Q_M$ LARGE
ENGINE SPEED Ne — HIGH

*Fig.12B*

TARGET TORQUE Tr — LARGE
$I_M$ ADVANCE
ENGINE SPEED Ne — HIGH

*Fig.12C*

RETARD
$k(I_M)$
WARMED UP
O
CATALYST TEMP. Tcat — HIGH

*Fig.12D*

TARGET TORQUE Tr — LARGE
L SMALL
ENGINE SPEED Ne — HIGH

27

*Fig.13A*

*Fig.13B*

*Fig.13C*

## Fig.14

POST INJ. LARGE

POST INJ. MIDDLE

POST INJ. SMALL

EXHAUST GAS TEMP. [°C]

POST INJ. TIMING [°CA]